# EUROPEAN PATENT APPLICATION

(11) **EP 1 125 871 A2**
(43) Date of publication of application: **22.08.2001**
(21) Application number: 01201349.6
(22) Date of filing: 15.04.1999
(51) Int. Cl.: B65G 47/38, B65G 47/40

(54) **A device for unloading containers**

(30) Priority: 22.04.1998 US 82608 P
(62) Divisional of application: 99302923.0
(71) Applicant: JERVIS B. WEBB INTERNATIONAL COMPANY, Farmington Hills, Michigan 48331-5624 (US)
(72) Inventor: Lecroy, Donald L., Mabelton, Georgia 30126 (US)
(74) Representative: Crouch, David John

(57) **Abstract**

A device for unloading containers comprising a generally horizontal platform having a front edge and a rear edge, a holder for holding a container on said platform, a first platform support, and a guide for guiding the first platform support. The guide has a first end at a first level and a second end at a second level, the second level being lower than said first level. A second platform support is provided for supporting the rear edge at a level higher than the second level. An actuator is also provided for moving the platform and the first platform support along the guide until the front edge support reaches the second end of the guide.

## Description

The present invention relates to a device for unloading containers, and more especially, to apparatus for cargo processing and sorting which presents items to a processing station in a controlled manner.

Conveyor systems are widely used for transporting materials from one point to another. In factories, conveyors carry objects along assembly lines from one processing point to the next, bring materials out of storage and return finished products to warehouse locations. In airports, conveyors are used to move baggage and other cargo from ticketing counters to make up areas where the items are placed onto trucks and carried to waiting planes. Conveyors are also used to bring items from a plane to a baggage claim area inside an airport terminal. These systems can be quite long, move at a wide range of speeds and be arranged in many different configurations.

When objects such as baggage arrive at a final or intermediate destination, they must generally be brought to rest before being further processed. At low speeds, the objects may fall off the end of the conveyor into a pile for further manual processing, or they may be pushed laterally off the conveyor by a diverter or pusher. When the objects are carried in a tray or other carrier, such as in commonly done with baggage, a device such as a tipper must be provided to tip or otherwise remove the baggage from the carrier. Baggage is relatively durable, and such treatment does little harm. However, when the baggage or other objects are moving at high speeds, it cannot safely be tipped or dropped from the conveyor. The kinetic energy of the moving baggage must be absorbed in order to stop the object, and when the energy is absorbed by the bag itself or other nearby bags, damage often occurs. Tippers operating at high speeds can also damage baggage. In addition, when baggage is to be manually processed after leaving the conveyor, the potential for injury to persons working near the terminal end of the conveyor is high. Finally, if items of baggage arrive in quick succession at a station, it can be difficult for the persons processing the items to work efficiently. However, slowing down a conveyor also results in a lower throughput and reduces efficiency. Therefore, systems today generally operate at a relatively high speed, and safety precautions must be taken to minimize damage to the baggage or other objects leaving the conveyor and injury to individuals working near the conveyor.

The present invention addresses these and other problems by providing a device for unloading containers comprising:
a generally horizontal platform having a front edge and a rear edge;
a holder for holding a container on said platform;
a first platform support;
a guide for guiding said first platform support, said guide having a first end at a first level and a second end at a second level, said second level being lower than said first level;
a second platform support is provided for supporting said rear edge at a level higher than said second level; and
an actuator for moving said platform and said first platform support along said guide until said front edge support reaches said second end of said guide.

One example of such a device comprises a handling system that includes a high speed conveyor for transporting objects, a diverter for selectively removing objects from the high speed conveyor, an accumulation conveyor for receiving objects from the high speed conveyor, and an unloading device for removing articles from the accumulation conveyor, which device may be a tipper when the articles are carried on the conveyors in trays. The accumulation conveyor slows the articles leaving the high speed conveyor and presents them to the unloading device at a generally constant rate, a rate independent of that at which the objects are diverted from the conveyor.

The invention may comprise a baggage tipper for tipping baggage trays comprising a generally horizontal platform having a front edge and a rear edge, a conveyor mounted on said platform parallel to said front and rear edges, a holder for holding a baggage tray on said conveyor, a pair of front support wheels separated by a first distance, a pair of rear support wheels separated by a second distance, a first pair of wheel guides for supporting and guiding said front support wheels, each of said first pair of wheel guides having a first end at a first elevation and a second end at a second elevation, a second pair of wheel guides for supporting and guiding said rear support wheels, said second pair of wheel guides being located generally at said first elevation and being generally horizontal, and a linear actuator for moving said platform along said support wheel guides. Such a novel tipper mechanism can be made that gently tips articles from the conveyor with a smooth, non-jarring motion and which is of a simpler construction than tippers heretofore known. The tipper is highly useful in connection with the subject article handling system, but can also be used quite effectively in most other situations where a baggage tipper is called for, and even in some applications where previous tippers would have been too violent or too expensive to maintain. The tipper includes a generally horizontal platform having a front edge and a rear edge and a holder for holding a container on said platform. The platform has a first platform support and a guide for guiding said first platform support. The guide has a first end at a first level and a second end at a second level, the second level being lower than the first level. A second platform support supports the rear edge at a level higher than the second level. An actuator is positioned to move the platform and the first platform support along the guide until the front edge support reaches the second end of the guide.

The present invention is particularly useful in connection with baggage handling systems such as those used in airports, and for simplicity, the invention will be described herein in terms of an airport baggage handling system. It should be understood, however, that this invention is not limited to airport applications and could be used in connection with any article handling system in which the gentle handling of articles is required.

It is therefore the principal aim of the present invention to provide an article handling system for minimizing damage to the articles being processed.

It is another aim of the present invention to provide an improved tipping device for tipping objects from a tray.

It is a further aim of the invention to provide a baggage handling system which includes an accumulation buffer between a high speed baggage conveyor and a baggage tray tipper to allow the tipper to operate at a rate independent of the rate of the high speed conveyor.

It is still another aim of the present invention to provide a baggage handling system in which baggage trays are routed to an appropriate processing station, emptied of their contents, and automatically carried to a storage location where they can be retrieved for further use.

It is still a further aim of the present invention to provide an improved baggage tray tipper that is driven by the rotation of a rotary motor.

### BRIEF DESCRIPTION OF THE DRAWINGS

These and other aims of the invention will be better appreciated from a reading and understanding of the following detailed description of the preferred embodiments of the invention together with the following drawings of which:
Figure 1 is a plan view of a baggage handling system according to the present invention which system includes a baggage tray tipper,
Figure 2 is a side elevational view of the tipper shown in Figure 1;

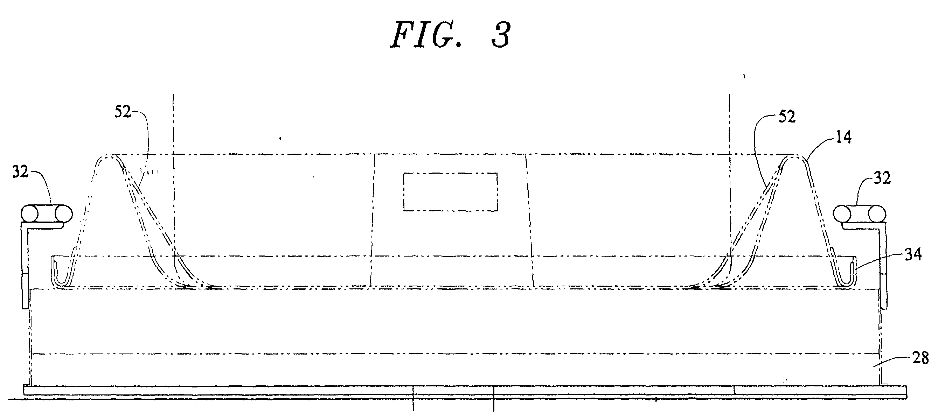

Figure 3 is an enlarged side elevational view of a baggage tray on the tipper shown in Figure 2;

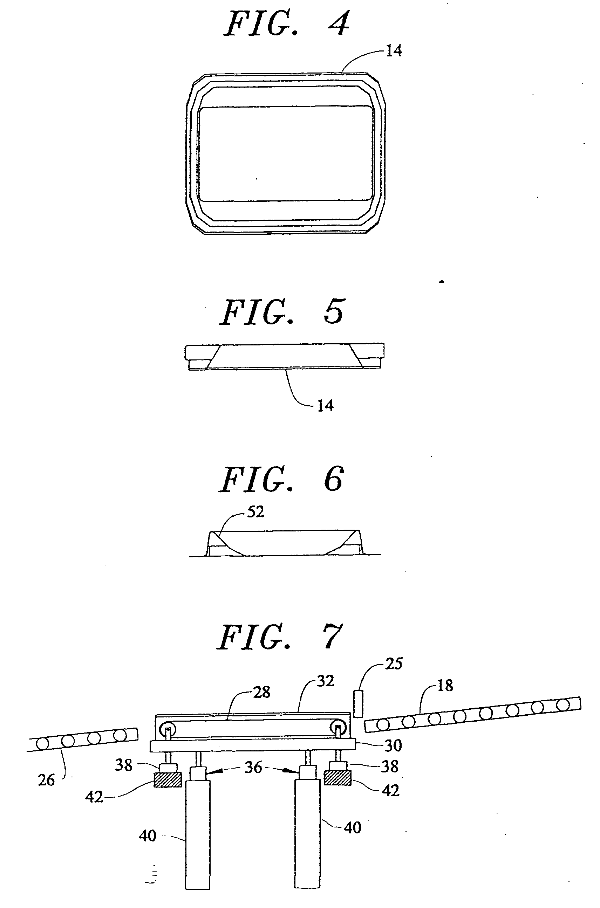

Figure 4 is a top plan view of the baggage tray shown in Figure 2;
Figure 5 is a side elevational view of the baggage tray shown in Figure 2;
Figure 6 is an end elevational view of the baggage tray shown in Figure 2;
Figure 7 is a front elevational view of the tipper shown in Figure 2;
Figures 8A - 8J are side elevational views of the tipper of Figure 2 showing the tipper moving through one complete operational cycle;
Figure 9 is a top plan view of a second embodiment of a tipper according to the subject invention; and,
Figure 10 is a side elevational view of the tipper of Figure 9.

### DESCRIPTION OF THE PREFERRED EMBODIMENTS

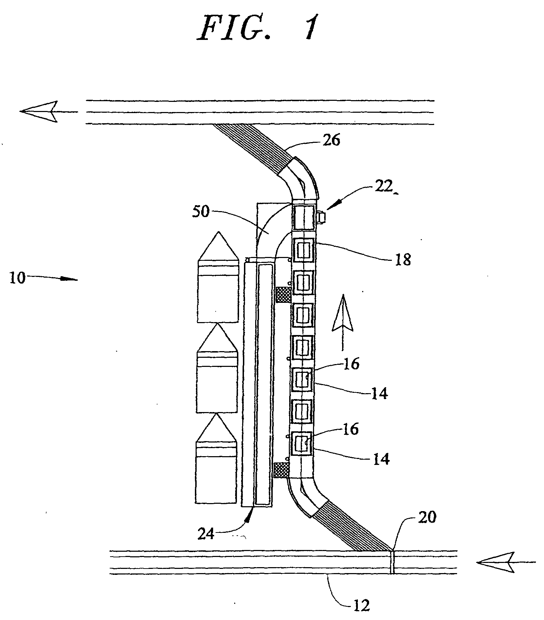

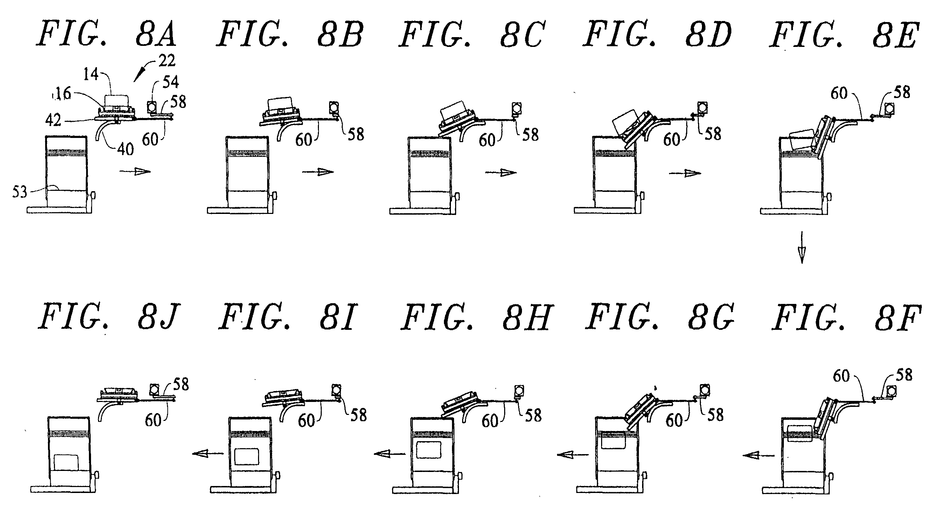

In a preferred embodiment of the subject article handling system 10, as seen in Figure 1, the invention comprises a high speed conveyor line 12 for carrying baggage trays 14 holding items of baggage or other cargo 16, at least one accumulation conveyor 18, a high speed diverter 20 for selectively diverting trays 14 from the high speed line 12 onto one of the accumulation conveyors 18, and a tipper 22 for receiving trays 14 from the accumulation line 18 and tipping the baggage 16 out of the trays 14 into one of the make-up areas 24 of the airport for further processing. The high speed conveyor 12 is preferably a belt conveyor, and the accumulation conveyor 18 may be a zero-pressure accumulation conveyor, or an accumulation conveyor of simpler construction that allows the trays to impact against one another. A stop 25, shown in Figure 7, is provided at the end of the accumulation conveyor before the tipper 22 to prevent the trays 14 from moving onto the tipper 22 until called for. This arrangement allows the tipper 22 to operate at a steady pace and to tip objects gently into the make up area. When trays 14 are diverted from the high speed line 12 at a pace faster than that tipper 22 is set to operate, the trays 14 accumulate upstream from the tipper 22 without affecting the pace of the tipper or slowing down the high speed line. The length of the accumulation conveyor 18 will depend on the rate of the high speed line 12, the operating rate of the tipper 22, and the number of baggage trays 14 that can normally be expected to arrive at the accumulation line 18 in a given length of time. In a typical airport setting, for example, it may be know that approximately 180 trays are expected to arrive at a given make-up area 24 over a 30 minute period, a rate of approximately six trays per minute. The tipper 14 may operate safely at a rate of six bags per minute or higher, and therefore the buffer need only be long enough to accommodate surges in the number of trays. An additional conveyor 26 is located downstream from the tipper 22 to receive empty baggage trays 14 and to transport them to a storage location (not shown) or return them to ticket counters or other locations where they are needed.

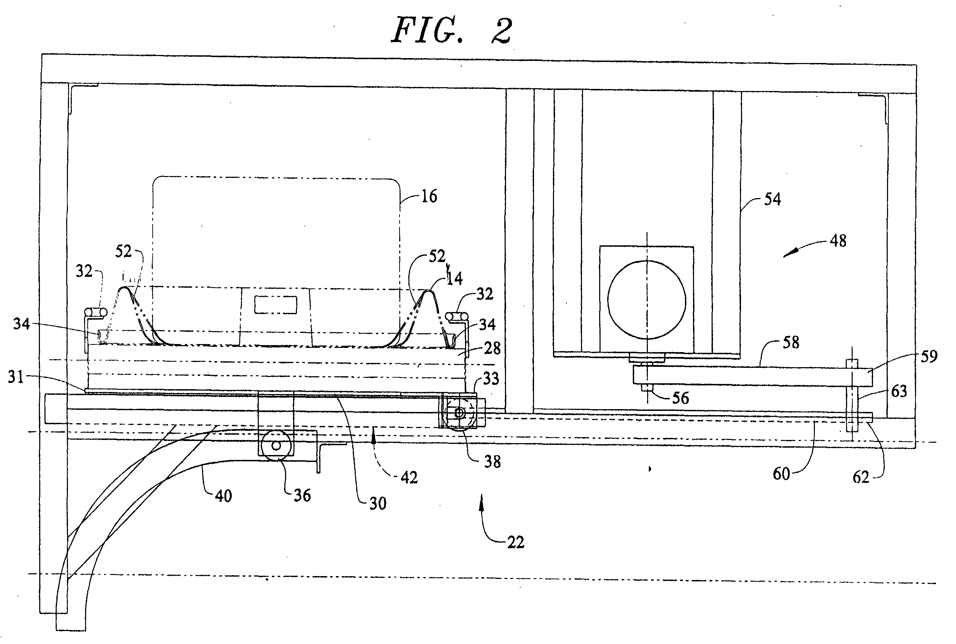

As seen in Figure 2, the tipper 22 of the preferred embodiment of the subject invention comprises a section of belt conveyor 28 mounted on a movable platform 30 so that it can receive trays from the accumulation conveyor 18. The platform includes a leading edge 31 and a trailing edge 33. The platform 30 includes rail members 32, and a portion 34 of each tray 14 is positioned under these rails 32 when the tray 14 is on the tipper 22 to hold the tray on the tipper while it is being tipped. The platform 30 is mounted on two sets of wheels, a leading set 36 which is spaced apart by a first distance and a trailing set 38 spaced apart by a second distance. Due to the differences in the spacings between the wheels of these sets, separate supports 40, 42 are provided for each set of wheels. Both sets of supports include a first portion 44, 46 for supporting the platform 30 and belt conveyor 28 in a generally horizontal configuration. The supports 40 for the leading wheels 36 curve outwardly and downwardly from this first portion 44 while the supports 42 for the trailing wheels 38 are generally horizontal. Thus when the platform 30 is pushed in the direction of the leading wheels 36 by a suitable actuator 48, the leading edge 31 of the platform travels in a downward direction while the rear of the platform remains essentially at its original level. This causes the baggage tray 14 retained on the tipper 22 to tip forward and dump its contents into a receiving area 50 below. The actuator 48 then pulls the trailing edge 33 of the platform 30 back toward actuator 48 to return the platform to its original position. Unlike prior tippers where baggage was abruptly tipped from a tray, the present arrangement allows for a smoothly operating system that tips trays gradually to gently remove baggage therefrom. The curved or large radius interior walls 52 of the trays 14 contribute to this smooth transfer or tipping of baggage from the tray. A complete cycle of the tipping sequence is shown in Figures 8A - 8J.

In addition to tipping the baggage trays gently, the actuator 48 driving the tipper 22 can be an ordinary rotary motor 54. The tipper 22 is moved from its horizontal start position, shown in Figure 8A through a complete tipping cycle, and returned to its horizontal position with one rotation of the motor drive shaft 56. This is an improvement over prior art systems in which complex actuators were used to control the position and operation of the tipper. This improvement therefore makes tippers more economical to operate and build. The trailing edge 33 of the tipper platform 30 is hinged to a first rod 58 having a free end 59 which extends in the general direction of the motor 54. A second rod 60 is fixedly connected to the motor drive shaft 56 and rotates therewith. The end 62 of this second rod 60 is then connected to the free end 59 of the first rod 58 by a pin 63 or other mechanism which allows the connected ends of the rods to rotate about a common axis. As the second rod 60 rotates through the first 180 degrees of a motor cycle, the first rod 58 and hence the platform 30 is pushed in the direction of the leading edge 31 of the platform 30, away from the motor 54. This sequence is shown in Figures 8A - 8E. Half way through a complete revolution of motor shaft 54, Figure 8E, the platform 30 is in a generally vertical position so that any baggage in a tray on the platform will fall therefrom. As the second rod 60 continues to rotate with the drive shaft 54 back toward its start position, Figures 8E - 8J, the first rod 58 is pulled in the direction of the trailing edge 33 of the platform 30, back toward the motor 54, until the platform 30 has returned to its original starting position when the motor has completed one cycle. Thus each cycle of the tipper corresponds to one cycle of the motor, and the position of the tipper can easily be controlled by controlling the motor and without the use of complicated linkages and controls.

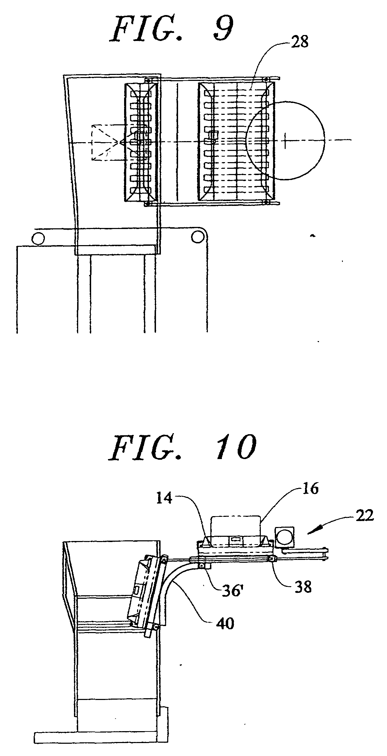

Figures 9 and 10 show a second embodiment of the present invention in which leading wheels 36' are located proximate to leading edge 31 of platform 30, but which is otherwise substantially identical to the tipper of the first embodiment. While support wheels 36, 36', and 38 have been described as wheel pairs, a single wheel, or three or more wheels could easily be substituted for these wheel pairs without exceeding the scope of this invention.

As such, an invention has been disclosed in terms of preferred embodiments thereof which fulfills each and every one of the aims of the present invention as set forth above and provides new and improved method and apparatus for high speed processing of articles.

Of course, various changes, modifications and alterations from the teachings of the present invention may be contemplated by those skilled in the art without departing from the intended spirit and scope thereof. It is intended that the present invention only be limited by the terms of the appended claims.

## Claims

1. A device for unloading containers comprising:
a generally horizontal platform having a front edge and a rear edge;
a holder for holding a container on said platform;
a first platform support;
a guide for guiding said first platform support, said guide having a first end at a first level and a second end at a second level, said second level being lower than said first level;
a second platform support is provided for supporting said rear edge at a level higher than said second level; and
an actuator for moving said platform and said first platform support along said guide until said front edge support reaches said second end of said guide.

2. A device according to claim 1 wherein said first platform support comprises at least one wheel and said guide comprises at least one track for supporting said at least one wheel.

3. A device according to claim 2 wherein said at least one wheel comprises a pair of wheels separated by a first distance and said at least one track comprises a pair of tracks separated by said first distance.

4. A device according to claim 3 wherein said second platform support comprises first and second rear support wheels spaced apart by a second distance, said device further including guides for said first and second rear wheels.

5. A device according to claim 4 wherein guides for said first and second rear support wheels comprise first and second tracks spaced apart by said second distance.

6. A device according to claim 5 wherein said actuator comprises a motor having a driveshaft connected to said platform by an arm.

7. A device according to claim 6 wherein said motor moves said platform in a first direction during one half of its cycle and in a second direction during the second half of its cycle.

8. A device according to claim 6 or claim 7 wherein said rear support tracks are generally horizontal and located at said first level.

9. A device according to any preceding claim further including a conveyor mounted on said platform extending in a direction parallel to said front and rear edges.

10. A baggage tipper for tipping baggage trays comprising a generally horizontal platform having a front edge and a rear edge, a conveyor mounted on said platform parallel to said front and rear edges, a holder for holding a baggage tray on said conveyor, a pair of front support wheels separated by a first distance, a pair of rear support wheels separated by a second distance, a first pair of wheel guides for supporting and guiding said front support wheels, each of said first pair of wheel guides having a first end at a first elevation and a second end at a second elevation, a second pair of wheel guides for supporting and guiding said rear support wheels, said second pair of wheel guides being located generally at said first elevation and being generally horizontal, and a linear actuator for moving said platform along said support wheel guides.
